# EUROPEAN PATENT SPECIFICATION

(11) **EP 2 985 629 B1**
(45) Date of publication and mention of the grant of the patent: **29.09.2021**
(21) Application number: 14380024.1
(22) Date of filing: 14.08.2014
(51) Int. Cl.: G01S 17/88, G01S 17/08, B61L 3/00, G01S 7/48, B61L 3/12, B61L 23/04, B61L 25/02

(54) **System and method for detecting and locating the center of beacons installed along guided vehicle routes**
System und Verfahren zur Detektion und Ortung des Mittelpunkts von entlang geführter Fahrzeugrouten installierten Baken
Système et procédé permettant de détecter et de localiser le centre de balises installées le long des itinéraires d'un véhicule guidé

(43) Date of publication of application: 17.02.2016
(73) Proprietor: Siemens Rail Automation S.A.U., ES-28760 Tres Cantos (Madrid) (ES)
(72) Inventor: Garrido Barroso, David, E-28805 Alcala de Henares (ES)
(74) Representative: Siemens Patent Attorneys

(56) References cited:
- JP-A- H03 107 712
- US-A1- 2004 056 182
- US-A1- 2006 115 113
- BRAUNER J-P: "EURO-BALISE S21 VON SIEMENS FUER DEN FERNVERKEHR", SIGNAL + DRAHT, TELZLAFF VERLAG GMBH. DARMSTADT, DE, vol. 89, no. 5, 1 May 1997 (1997-05-01), pages 5-10, XP000779913, ISSN: 0037-4997
- None

## Description

The present invention concerns a system and a method for detecting/locating the center of a beacon installed at points along a route followed by a guided vehicle.

The present invention is directed to the localization of a guided vehicle along a route. It relates more particularly to a system and method for locating a guided vehicle relative to a beacon or balise installed at points along the route followed by said guided vehicle. By determining the center of a beacon, the system and method according to the invention allow a precise determination of the position/location of the guided vehicle. From a general point of view the present invention deals with beacons or balises installed on the route or way taken by the guided vehicle and which are configured for exchanging data with the guided vehicle by means of an electromagnetic signal when the guided vehicle passes near, for example above/over, said balise or beacon. In particular, said balise is an Eurobalise, i.e. a balise which complies with the European Train Control System, and is installed between rails of a railway followed by the guided vehicle. "Guided vehicle" according to the present invention refers to public transport means such as buses, trolleybuses, street-cars, subways, trains or train units, etc., as well as load transporting means such as, for example, overhead traveling cranes, for which safety is a very important factor and which are guided along a route or railway by at least one rail, in particular by two rails between which beacons/balises are placed.

Systems and methods for determining the position of a guided vehicle relative to a beacon are known in the art. For example, EP1227024B1 describes an embedded system for generating a signal for locating a railway vehicle, wherein said embedded system comprises an antenna having a first and second loop characterized by different radiation patterns and which generate respectively a first induced current and a second induced current when said antenna passes above a beacon located at a known position on the path of the railway vehicle. Since the first and second loops have different shapes, changes in the phase of the first induced current is different from changes in the phase of the second induced current, and this difference in the phases is then used by a processing system for determining the position of the railway vehicle relative to the beacon.

Generally, the dynamic of the transmission of electromagnetic signals between the beacon and the on-board system for locating a railway vehicle makes it difficult to estimate the center of the beacon and thus an accurate position of the railway vehicle. In particular, vital accuracy is limited by the presence of "side lobes" (see Fig. 4 of EP1227024B1) that are due to the return path of magnetic flux and which could increase the length of the zone where the beacon is received by the on-board system antenna. Even in the case of an "8-shape" loop as described in EP1227024B1, vital detection of the beacon center remains challenging because the induced signals could be very weak and a strong gain must be ensured in the receiver. Finally, known prior art uses phase detection for determining the center of the beacon, which also might not be reliable with weak signals.

Other techniques, as disclosed for instance in US 2004/0056182A1, enable to detect obstacles on a railroad track by means of a scanning system installed on-board a guided vehicle and configured for scanning a laser beam over tracks ahead of the guided vehicle with a predetermined pattern, wherein light echoed from the scanned laser beam is converted into electrical signals representative thereof, and positions of the light echo signals along the scan pattern is determined, the light echo signals and corresponding positions being finally processed to produce an image of a scene ahead of the guided vehicle for use in detecting a threat to the guided vehicle. Unfortunately, such systems do not provide any determination of a beacon center. Another system described in the paper of J-P Brauner entitled "EURO-Balise S21 von Siemens für den Fernverkehr" (SIGNAL + DRAHT, TELZLAFF VERLAG GMBH. DARMSTADT, DE, vol. 89, no. 5, 1997, pages 5-10) discloses the use of a laser beam for detecting a start marker indicating the beginning of a group of beacons and an end marker indicating the end of said group, the reflection of the laser beam by the markers being used for triggering/stopping a path measurement. Again, such technique is not suitable for detecting the center of a beacon.

An objective of the present invention is therefore to propose a system and a method capable of determining the location of a guided vehicle relative to a beacon or balise, and which are simple, economical to implement, reduce the risks of false detection, and improve therefore the reliability of the determination of the location of the guided vehicle relative to the beacon. Preferentially, the system and method according to the invention should be capable of determining the location of a guided vehicle compared to the center of the beacon or balise in a manner free of any processing of a signal resulting from current induced by an electromagnetic field of the beacon or balise.

For achieving said objective, the present invention proposes notably a system and method for detecting the center of a beacon as disclosed by the objects of the independent claims. Other advantages of the invention are presented in the dependent claims.

The invention provides therefore a system for detecting and/or locating the center of a beacon, said system being configured for being mounted on-board a guided vehicle, and capable of locating the center of the beacon when said guided vehicle passes the beacon, i.e. passes above/over/at proximity of the beacon, the system comprising:
- a laser rangefinder using a laser beam for measuring a distance to the beacon when the guided vehicle passes the beacon, the laser rangefinder delivering a signal SL that is a measure of the distance to objects that have reflected its laser beam;
- a processing unit for determining the position of the center of the beacon from the signal SL provided by the laser rangefinder, wherein the position of the center of the beacon is determined by the processing unit by identifying a complete or partial beacon profile in the signal SL and determining the beacon center from said beacon profile. In particular, the processing unit is able to determine the center of the beacon from at least one geometric characteristic of the beacon profile that can be, for instance, stored in a database of the processing unit, said geometric characteristic being for example the position of the beacon center compared to the position of an edge of the beacon profile.

In particular, the laser beam of the laser rangefinder is directed to the beacon, i.e. the laser rangefinder according to the invention has its laser beam pointing to a direction pointing to the beacon when the guided vehicle on-board of which the system according to the invention is installed passes, e.g. passes over/above/close to, said beacon.

Preferentially, the system according to the invention is able to cooperate with a balise reader comprising an emitter, a receiver, and a processing unit. The emitter is in particular configured for remotely powering the beacon, in particular by means of radiant energy. Said emitter comprising for example an antenna comprising an emitting loop for radiating energy, in particular radio frequency energy, the beacon being then powered by said radiated energy and able to transmit, in return, an electromagnetic signal. The receiver comprises an antenna incorporating at least one receiving loop for picking up the electromagnetic signal produced by the beacon, more precisely the electromagnetic signal produced by a transmitting loop of the beacon, the receiver comprising thus a receiving loop configured for picking up the electromagnetic signal sent by the beacon in response to its powering by the emitter and for delivering a signal SR to the processing unit, said signal SR being current induced by the electromagnetic signal in said receiving loop, wherein said current provides a measure of the amplitude of the electromagnetic signal in function of the position of the receiving loop (e.g. in function of the position of the center of the receiving loop) compared to the beacon, more precisely compared to the position of the center of the transmitting loop. In the context of the present invention, the center of the beacon refers to the center of the transmitting loop, and centers of receiving or transmitting loop are notably geometric centers. The processing unit of the balise reader and the processing unit of the system according to the invention can be a single and same processing unit, or can be two separate devices. In particular, the processing unit of the system according to the invention is capable of processing the signal SR delivered by the receiving loop and at least the signal SL delivered by the laser rangefinder, wherein the processing unit is configured for determining a time T1 at which the receiver passes the center of the beacon from the amplitude of said signal SR, the time T1 being the time at which the amplitude of the signal SR reaches its maximum when the receiving loop passes (e.g. passes above/over) said beacon. Preferentially, the processing unit is also capable of determining, from the identification of the profile of the beacon in the signal SL and the temporal dependence of the signal SL, a time T2 at which the laser beam reflected by the center of the beacon is received by a receiver of the laser rangefinder, wherein in particular said receiver outputs the signal SL. In particular, the processing unit is able to identify a beacon profile once the complete profile of the beacon has been measured by the laser rangefinder. Advantageously, at the moment a beacon profile is recognized by the processing unit, said processing unit knows the position of the beacon center. Depending on the beacon profile, e.g. if it has special geometric distinctive features, the processing unit might recognize said beacon profile from a measurement by the laser rangefinder of only a part of the beacon profile. In particular, if the processing unit identifies a beacon profile at a time t, then, from characteristics of said profile stored in the processing unit like for example the position of the beacon center compared to a beacon profile edge and/or from moving characteristics of the guided vehicle like its speed, said processing unit is able to determine the position of the beacon center compared to the position of the laser rangefinder receiver at said time t and/or the time T2 at which the laser beam reflected by the center of the beacon was received by the laser rangefinder receiver.

According to the present invention, the laser rangefinder is configured for measuring the distance to the beacon when the guided vehicle passes (e.g. above/over) said beacon. The laser rangefinder is connected to the processing unit for delivering to said processing unit the signal SL, said signal SL being a measure of the distance to objects that reflect the laser beam of the laser rangefinder. The system according to the invention is configured for having the laser beam of its laser rangefinder pointing to the beacons installed at points along a route followed by the guided vehicle. Preferentially, the laser rangefinder is configured for having its laser beam pointing in a direction perpendicular to the displacement direction of the guided vehicle. In other words, the laser beam emitted by the laser rangefinder is in particular substantially perpendicular to a plane comprising the transmitting loop of the beacon. Said signal SL is thus a physical profile reading of the route or track followed by the guided vehicle.

Preferentially, the processing unit is able to correlate the signal SL and the signal SR for improving the determination of the beacon center. In particular, the signal SR is used for determining when the signal SR and the signal SL have to be correlated. In other words, the signal SR might be used for triggering an acquisition of the signal SL. Indeed, the signal SR allows to determine when the receiver passes close to the beacon since it receives the electromagnetic signal of the beacon only when it is at proximity of said beacon, e.g. above/over said beacon. The reception of the electromagnetic signal of the beacon might also be used by the processing unit for triggering the correlation of the signal SR with the signal SL, said correlation being automatically stopped when the receiver of the balise reader ceases to receive the electromagnetic signal of the beacon. Preferentially, the system according to the invention is configured for having the balise reader emitter and receiver interacting with the beacon before the laser rangefinder interacts with said beacon. In other words, according to a first preferred embodiment, the laser rangefinder is preferentially placed after the receiver of the balise reader compared to a direction of displacement of the guided vehicle. Said configuration of the system according to the invention advantageously improves the triggering of the signal SL by the signal SR.

According to a second preferred embodiment, the laser rangefinder is preferentially placed before the receiver of the balise reader compared to a direction of displacement of the guided vehicle so that the processing unit might identify a beacon profile and determine the center of said beacon before the signal SR reaches an intensity maximum. Preferentially, the processing unit according to the invention is able to communicate with other on-board devices of the guided vehicle in order to get information related to the speed of the guided vehicle in function of the time. Moreover, the database of the processing unit according to the invention may comprise information related to the distance (in the direction of displacement of the guided vehicle) between the laser rangefinder receiver and the center of the receiving loop of the balise reader, the beacon length (i.e. the length of the beacon profile in the direction of displacement of the guided vehicle) and may store the moment at which the balise profile has been recognized for further processing, for instance, for further processing by on-board devices of the guided vehicle.

Preferentially, the processing unit comprises at least a database for storing at least one beacon profile that is then used by the processing unit for determining the center of the beacon, notably by correlation of the signal SL with the beacon profile. Indeed, the signal SL according to the invention is preferentially correlated by the processing unit with a beacon profile stored in its database, said beacon profile being a profile pattern that corresponds to the profile of the physical beacon installed at a point along the route followed by the guided vehicle. To be more precise, the beacon profile stored in the database of the processing unit corresponds to the part of the beacon that is able to reflect the laser beam of the laser rangefinder when the guided vehicle passes said beacon. The database according to the invention may comprise several beacon profiles, and for each beacon profile it may comprise some geometric characteristics or special geometric distinctive features, like the position of the beacon center compared to edges of the profile, distance between at least one edge of the beacon profile and the beacon center, or distance between the beacon center and said special geometric distinctive feature of the beacon profile.

Preferentially, the present invention proposes to provide
- the part of the beacon facing the laser beam of the laser rangefinder when said guided vehicle passes the beacon, and/or
- an area of the track that precedes the beacon or follows the beacon compared to the direction of displacement of the guided vehicle, said area being scanned by the laser rangefinder when the guided vehicle moves according to said direction of displacement,
with a lid or cover characterized by a special pattern comprising for example at least one special geometric distinctive feature and that is configured for improving/making easier the determination of the center of the beacon by means of the system according to the invention. In particular, the present invention proposes to mount said lid or cover on a selection of beacons installed at points along the route followed by the guided vehicle, preferentially only on beacons after which a stop of the guided vehicle is foreseen, e.g. on beacons that are at proximity of guided vehicle stations. In particular, if the lid or cover is installed on said area preceding and/or following the beacon, then the distance separating a distinctive feature of the lid installed on said area and the center of the beacon might be stored in the database. This will advantageously improve odometry calculations for stop points of the guided vehicle, notably at the stations.

Preferentially, the system according to the invention comprises several laser rangefinders Rᵢ mounted for having their respective laser beams pointing in a same direction (the laser beams are parallel and point in said direction that points to the beacon when a guided vehicle on-board of which the system according to the invention is installed passes said beacon) but to different points on the beacons when said guided vehicle passes the beacon, each of said laser rangefinders Rᵢ delivering a signal SLᵢ to the processing unit. Each laser rangefinder will thus scan a different line on the beacon and measure a different profile if the part of the beacon reflecting the laser beams is inhomogeneous. This would advantageously avoid single point scattered irregularities disturbance and allows a parallel processing of the signals SLᵢ by the processing unit, wherein the processing of the signals SLᵢ is performed at different sampling rate phases for obtaining an improved resolution measurement of the beacon profile.

The present invention concerns also a method for detecting and/or locating the center of a beacon installed at a point along a route followed by a guided vehicle on board of which a system for detecting and/or locating the center of the beacon is mounted, or in other words, for locating the position of the guided vehicle compared to the position of the beacon center, said system comprising a laser rangefinder and a processing unit, the method according to the invention comprising the following steps:
- using the laser beam of the laser rangefinder for measuring a distance to the beacon, said laser rangefinder delivering a signal SL that is a measure of the distance to objects reflecting said laser beam;
- processing the signal SL by means of a processing unit, wherein said processing comprising identifying a beacon profile in the signal SL, and determining from said beacon profile the center of the beacon.

Preferentially, the method according to the invention comprises a cooperation of the system according to the invention with a balise reader that is capable of:
- remotely powering the beacon or balise by means of an emitter, wherein the beacon is adapted for transmitting an electromagnetic signal to the system;
- transmitting the electromagnetic signal to the receiver, wherein said electromagnetic signal is produced by the beacon in response to its powering;
- picking up the electromagnetic signal by means of the receiving loop and delivering a signal SR;
wherein said cooperation comprises processing the signal SR by means of the processing unit for correlating said signal SR and the signal SL.

In particular, the method according to the invention comprises determining by means of the processing unit a time T1 at which the receiver passes the center of the beacon from the amplitude/intensity of the signal SR correlated to the signal SL provided by the laser rangefinder, wherein said signal SL is in particular a measure by the laser rangefinder of the distance to the beacon when the guided vehicle passes above/over said beacon.

Further aspects of the present invention will be better understood through the following drawings, wherein like numerals are used for like and corresponding parts:
- Figure 1: schematic representation of a preferred embodiment of a system according to the invention mounted on board a guided vehicle.
- Figure 2: schematic representations of a signal SR and a signal SL according to the invention.
- Figure 3: schematic representation of a preferred embodiment of a lid or cover according to the invention.
- Figure 4: schematic representation of another preferred embodiment of a system according to the invention.
- Figure 5: schematic (a) side view, (b) front view and (c) top view of a preferred embodiment installed onboard a guided vehicle.
- Figure 6: schematic representation of a cooperation of the system according to the invention with an on-board equipment.
- Figure 7: schematic representation of a lid according to the invention placed before a beacon.
- Figure 8: schematic representation of the signals SR and SL for the special configuration of Fig. 7.

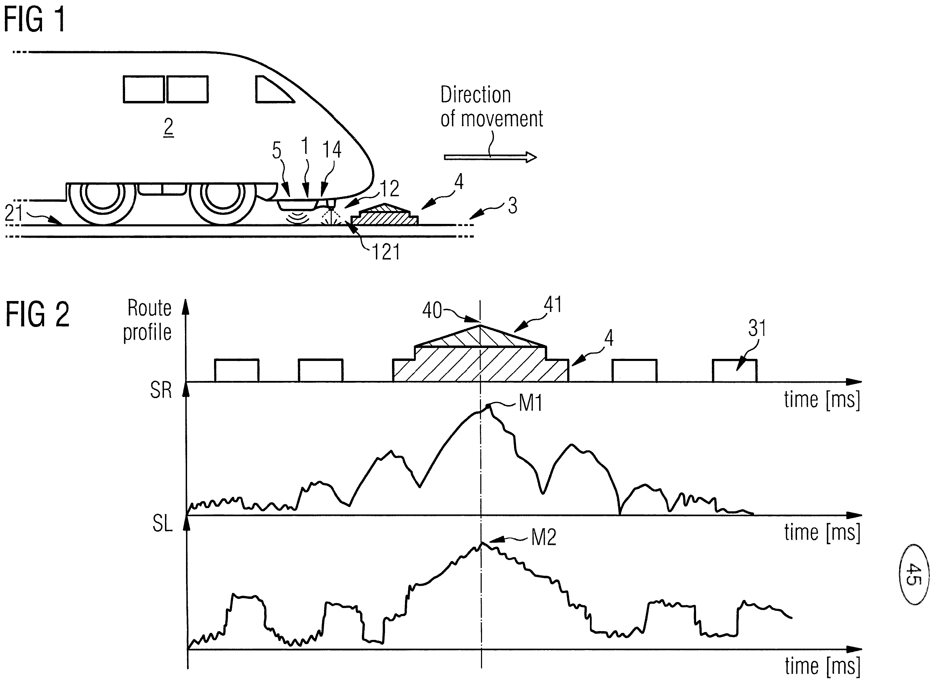

Figure 1 shows a system 1 according to the invention mounted on-board a guided vehicle 2 which is configured to follow a route defined by a pair of rails 3. A beacon 4 or balise is installed on the route or rail track 21 followed by the guided vehicle 2, for example between the rails 3. The rail track 21 may comprise several beacons 4 forming a system of beacons 4, each beacon being configured to exchange information with the guided vehicle 2 when the latter passes at proximity, for instance above/over, said beacon 4, said exchange involving the cooperation of the beacon 4 with a balise reader 5 installed on-board the guided vehicle 2. The beacon 4 and the balise reader 5 exchange information by means of electromagnetic signals transmitted from the beacon 4, respectively balise reader 5, to the balise reader 5, respectively beacon 4.

The system 1 according to the invention is configured for being mounted on-board the guided vehicle 2 and is able to locate the center of the beacon 4 by means of a laser rangefinder 12 delivering a signal SL to a processing unit 14 that is able, from said signal SL, to determine the position of the guided vehicle 2 relative to the beacon 4. Therefore, the system 1 enables to locate the guided vehicle 2 relative to the beacon 4, and to determine efficiently the position of the guided vehicle on a network equipped with a system of beacons 4 wherein the position of each beacon 4 is known.

The system 1 for locating the center of the beacon 4 installed along a route followed by the guided vehicle 2 on board of which the system 1 is configured to be mounted comprises at least a laser rangefinder 12 and a processing unit 14, and may cooperate with a balise reader 5 comprising at least an emitter and a receiver 51.

The emitter is configured for remotely powering the beacon 4. In particular, the emitter comprises an antenna for emitting radiant energy capable of powering the beacon 4 when the guided vehicle 2, or more precisely the emitter of the balise reader, is moving in the proximity of, e.g. above, the beacon 4. Said emitter comprises for example an antenna comprising an emitting loop capable of radiating energy, in particular radio frequency energy, wherein said radiated energy is able to power the beacon 4, i.e. to supply said beacon 4 in energy so that the latter becomes able to transmit, in return, an electromagnetic signal to the balise reader 5. The beacon 4 is of a type known in the art, comprising an antenna circuit capable of picking up the energy radiated by the emitter and of using said energy for transmitting information back to the balise reader 5 by means of a transmitter comprising a transmitting loop for sending the electromagnetic signal to the balise reader 5. Beacons 4 are installed at known positions/locations along the route followed by the guided vehicle 2.

The receiver 51 comprises at least one receiving loop that delivers a signal SR when receiving the electromagnetic signal emitted by the beacon 4 in response to its powering by the emitter, wherein said signal SR is current induced by the electromagnetic signal in said receiving loops. Preferentially, the receiver 51 of the balise reader 5 may provide the signal SR to the processing unit 14. The processing unit 14 is able to correlate the signal SR and the signal SL. The signal SR is current induced by the electromagnetic signal in the receiving loop of the balise reader receiver 51, wherein said current provides a measure of the amplitude of the electromagnetic signal in function of the position of the receiving loop 51 (e.g. in function of the position of the center of the receiving loop) compared to the beacon, more precisely compared to the position of the center of the transmitting loop. The signal SL is a measure of the distance to objects reflecting the laser beam 121 of the laser rangefinder, said laser rangefinder 12 being configured for being installed on the guided vehicle 2 so that its laser beam points to the track 21, the laser beam making preferentially an angle substantially equal to 90° with the track 21, i.e. being preferentially perpendicular to the track 21 or route followed by the guided vehicle 2.

Preferentially, according to a first preferred embodiment, the receiving loop and the laser rangefinder 12 are disposed one after another compared to the displacement direction of the guided vehicle 2 so that the system according to the invention will first sense the electromagnetic field of the beacon and second measure the profile of said beacon 4 when passing the beacon 4. According to a second preferred embodiment, the laser rangefinder 12 is preferentially placed before the receiver 51 of the balise reader 5 compared to a direction of displacement of the guided vehicle 2. Preferentially, the system 1 according to the invention comprises a balise reader 5. In particular, the laser rangefinder 12 is installed for having its laser beam 121 pointing substantially perpendicularly to the track 21 while passing through the center (i.e. the geometric center) of the receiving loop of the receiver 51. Advantageously, the latter configuration allows to detect at the same time the maximum of intensity of the electromagnetic field of the beacon 4 via the signal SR and the center of the beacon through beacon profile measurement by means of the laser rangefinder 12.

The laser rangefinder 12 according to the invention is of a type known in the art: it provides a measure of a distance to objects reflecting its laser beam. It is able to send, notably continuously, laser pulses in a laser beam 121 pointing in a direction that is configured for pointing towards the beacon 4 when the guided vehicle passes said beacon 4, preferentially the laser beam 121 pointing perpendicularly to a horizontal plane when the guided vehicle 2 is place on a horizontal plane, the laser rangefinder being able to measure the time, usually called time of flight, taken by the laser pulse to reach the beacon 4, be reflected by the latter and return to a receiver of the laser rangefinder 12. From the time of flight of the pulse, the laser rangefinder 12 is able to determine the distance to the object which has reflected the pulse, namely the beacon 4 according to the present invention, and consequently the profile of the route followed by the guided vehicle 2. The laser rangefinder 12 according to the invention is connected to the processing unit 14 for providing the latter with the signal SL that is, if the laser rangefinder 12 continuously measures the distance to objects that reflect its laser beam 121, a continuous measure of the profile of the route or track 21 followed by the guided vehicle 2, said profile of the route including also profiles of the beacons that are installed at points along said track 21. In particular, the laser rangefinder 12 is fixed compared to the guided vehicle 2. The system 1 according to the invention is notably configured for having the laser beam 121 of its laser rangefinder 12 pointing to the beacon when the guided vehicle 2 passes said beacon. More precisely, when the guided vehicle 2 passes the beacon, the laser beam 121 will scan the surface of the beacon 4 according to a scan line that is parallel to the direction of movement/displacement of the guided vehicle 2, i.e. it will scan a line on the part of the beacon that reflects the laser beam 121, and the laser rangefinder 12 will thus get a measure of the profile of the beacon 4 according to said scan line.

The processing unit 14 is configured for processing the signal SL, and in particular it might also processed the signal SR and preferentially, correlate it with the signal SL. Figure 2 shows schematically the signal SR and the signal SL that might be received by the processing unit 14 when the guided vehicle follows a route/track 21 comprising a beacon 4 and railway sleepers 31, the guided vehicle 2 moving in the direction of increasing distance (cf. the arrow direction of movement in Fig. 1). Figure 2 highlights the correspondence in function of the time of the signals SR, SL and the route profile, wherein "SL" is the profile of the route detected by the laser rangefinder expressed in millimeters and represented in function of the time, "SR" is the amplitude in volts of the signal SR that corresponds to the power density measured by the balise reader 5 in function of the time. Indeed, the signal SR might be represented as a measure in function of the distance travelled by the receiving loop, in other words in function of the distance travelled by the guided vehicle 2 or in function of the time, of the spectral power density of the electromagnetic field emitted by the transmitting loop of the beacon 4 in response to its powering by the emitter. In particular, the processing unit 14 according to the invention is able to determine at what time T1 the maximum M1 of the signal SR is reached when the guided vehicle 2 passes a beacon 4. The time at which this maximum M1 is reached corresponds to the time at which the center of the receiving loop of the receiver 51 is the closest to (usually above) the center of the beacon 4, more precisely when it is the closest to the center of the transmitting loop of the beacon 4. The signal SL is a measure by the laser rangefinder 12 of the profile of the route in function of the time or distance travelled by the laser rangefinder 12, in other words in function of the distance travelled by the guided vehicle 2. The processing unit 14 is able to recognize the profile of the beacon 4 in the signal SL and to determine on said profile at least a point M2. For this purpose, the processing unit 14 according to the invention comprises at least one database listing one or several beacon profiles for beacons likely to be met on the route of the guided vehicle 2. Each beacon profile stored in the database comprises at least one data related to a point M2 whose position on the beacon profile is known and stored in the database, allowing therefore to determine the position of the center of the beacon 4 compared to the position of said point M2. For instance, the point M2 might coincide with the center 40 of the beacon 4, or might be a point situated at a known distance from the center of the beacon 4. Said point M2 might coincide with a special geometric distinctive feature of the beacon profile (e.g. a bump/hole of known dimensions or a series of bump and holes). The processing unit 14 is able to correlate/compare the signal SL with the beacon profiles stored in its database in order to determine if the signal SL comprises one of the stored beacon profiles, and in the affirmative, the processing unit 14 is able to determine which of said stored beacon profiles corresponds to the beacon profile measured by the laser rangefinder 12, and once a corresponding beacon profile has been found/identified in the database, to deduct the position of the center of the beacon from the point M2 characterizing said corresponding beacon profile.

Preferentially, the signal SR is correlated to the signal SL for improving the determination of the beacon center 40. In particular, the detection by the processing unit 14 of the electromagnetic field of the beacon 4 from the signal SR, for instance the detection of an electromagnetic field exceeding a threshold value predefined in the processing unit 14, may trigger the acquisition by the laser rangefinder 12 of the profile of the route followed by the guided vehicle 2. In particular, the measure of the profile of the route followed by the guided vehicle 2 starts only once the electromagnetic field exceeds said threshold value and automatically stops once the electromagnetic field value is smaller than said threshold value. In this case, the laser rangefinder 12 is installed after the receiving loop of the balise reader 5 compared to the displacement of the guided vehicle 2, according to the first preferred embodiment.

Advantageously, the present invention allows to improve the determination of the exact position of the guided vehicle 2 compared to the beacon by correlating the determination of the center of the beacon 4 from the position of the point M2 in the beacon profile and from the measurement via the signal SR of the maximum intensity of the electromagnetic field of the beacon 4.

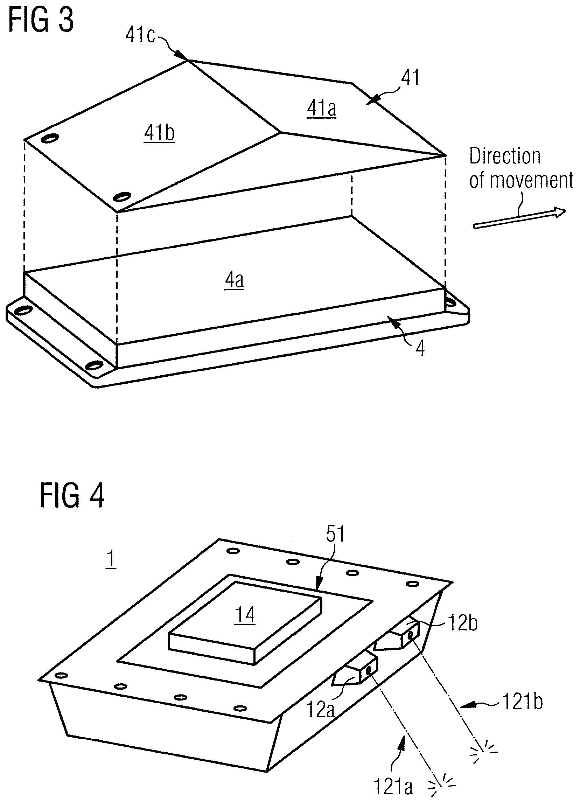

Figure 3 shows a schematic representation of a preferred embodiment of a lid or cover 41. Said lid or cover 41 is preferentially configuredfor modifying the beacon profile according a special pattern that might be stored in the database of the processing unit 14. Preferentially, the lid/cover 41 according to the invention is in particular configured for being installed on a part of the beacon that will reflect the laser beam 121 of the laser rangefinder 12 when the guided vehicle moves along its route. The lid or cover is thus in particular mounted on a part of the beacon 4 that faces the laser beam 121 when the guided vehicle passes close/above the beacon 4. Once a lid or cover 41 according to the invention is fixed to a beacon, then the beacon profile becomes characterized by said special pattern, so that when the laser beam scan a line on the surface of the beacon 4 equipped with said lid/cover 41, the special pattern of the beacon profile might easily be recognized by the processing unit 14. In particular, said special pattern may comprise a special geometric distinctive feature that enhance and facilitate the determination of the beacon center from a reading of the beacon profile by means of the laser rangefinder.

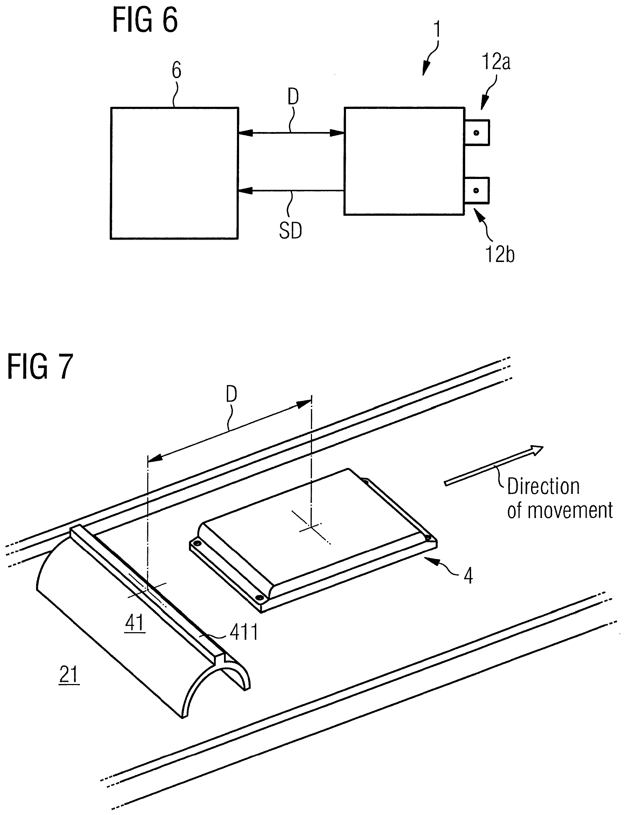

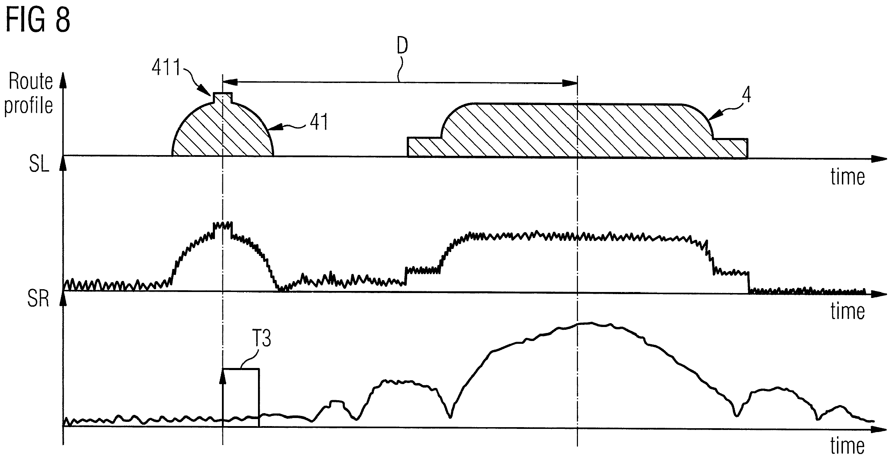

Optionally, the lid/cover 41 might be placed before or after the beacon 4 compared to the direction of movement of the guided vehicle (see Fig. 7), on an area of the track 21 that is scanned by the laser rangefinder, at a known position and distance D from the center of the beacon 4 as represented in Figure 7, said known position/distance D being preferentially stored in the database. Figure 8 shows the resulting signals SR and SL from the previously described configuration. In particular, the lid/cover according to the invention is placed before/after the beacon 4 so that a special distinctive feature 411 of the lid/cover is at a distance D from the center of the beacon 4. Advantageously, at the time T3, the system according to the invention may detect the special geometric distinctive feature 411 of the lid/cover 41, and deduct that the beacon center is situated at a distance D from the location where said special geometric distinctive feature 411 has been detected.

For example, a special geometric distinctive feature of the cover 41 is two inclined planes, respectively a first inclined plane 41a and a second inclined plane 41b forming the slopes of a roof for the beacon 4, wherein the peak 41c of the roof coincides with the center of the beacon 4. Typically, the height of the peak 41c compared to the height of the surface 4a of the beacon is just a few millimeters. Another example of a special geometric distinctive feature is a series of bumps and/or holes placed at known positions on the cover 41 of the beacon 4. Advantageously, a series of bumps and/or holes might allow the processing unit 14 to identify a beacon profile before the laser rangefinder has scanned the whole profile of the beacon 4. According to the invention, each profile of each lid/cover 41 fitted to be installed on beacons might be stored in the database of the processing unit 14. Preferentially, the surface of the lid/cover may comprise valleys and elevations for encoding additional information related to the beacon 4 (for example a reference number of the beacon, its position, etc.). In other words, the lid/cover 41 according to the invention is able to provide additional information related to the beacon 4 encoded in the form of valleys (or holes) and elevations (or bumps).

Figure 4 schematically shows another preferred embodiment of the invention, wherein the system 1 comprises several laser rangefinders, notably a first laser rangefinder 12a and a second laser rangefinder 12b, each emitting respectively a first laser beam 121a and a second laser beam 121b. The first and second laser rangefinders both deliver respectively a signal SL_1 and a signal SL_2 to the processing unit 14. Preferentially, the system 1 according to the invention may also comprise a balise reader 5 that comprises an emitter and a receiver 51 that delivers the signal SR to the processing unit 14, which is capable of processing both the signal SR and the signal delivered by each laser rangefinder. In particular, both signals SL_1 and SL_2 are then used, together or not with the signal SR of the receiver 51, for determining the position of the center of the beacon from an analysis of the route profile measured by each laser rangefinder and/or the beacon electromagnetic field measured by the receiver 51. The first and second laser rangefinders are installed for having their respective laser beams 121a, 121b pointing in parallel at two different points on the beacon 4, for example on the lid/cover 41 of the beacon 4, when the guided vehicle 2 passes said beacon 4, so that two different lines are scanned on the part of the beacon reflecting said laser beams 121a, 121b.

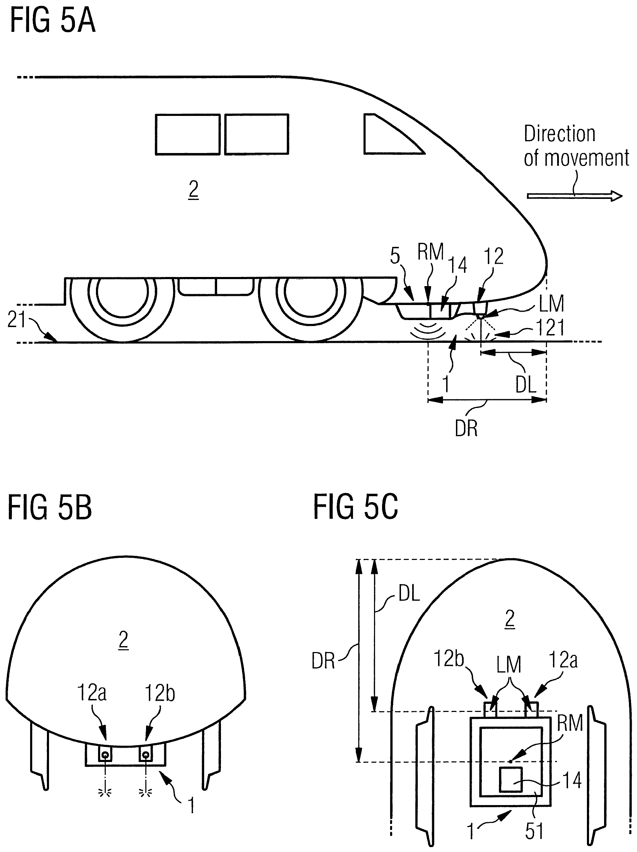

Figure 5 shows respectively a side view (Fig. 5a), a front view (Fig. 5b) and a top view (Fig. 5c) of the system 1 according to the invention mounted on-board the guided vehicle 2. The system 1 according to the invention may cooperate or may comprise a balise reader 5 mounted on-board the guided vehicle 2 so as being able to pick-up the electromagnetic field transmitted by the transmitting loop of the beacon 4. The system 1 according to the invention is able to measure the profile of the beacon by means of one or several laser rangefinders 12a and 12b. Preferentially, the system 1 according to the invention is mounted at the head end of the guided vehicle and/or at the tail end of said guided vehicle, notably under the bogie frame of the guided vehicle.

Preferentially, the laser rangefinder 12 according to the invention comprises a reference mark LM. Preferentially, the database according to the invention comprises at least one data DL that is the distance separating the reference mark LM from the closest extremity of the guided vehicle 2. Preferentially, said database comprises also a data DR that is the distance separating a reference mark RM of the balise reader from said closest extremity of the guided vehicle 2. Advantageously, from the location of the reference marks RM and LM compared to the closest extremity of the guided vehicle 2, the processing unit 14 according to the invention is able to know the position of the laser rangefinder relative to the balise reader 5. Preferentially, the reference mark LM coincides with the location of the laser rangefinder receiver. Preferentially, the reference mark RM coincides with the location of the geometric center of the receiving loop of the balise reader receiver. Preferentially, the reference mark RM and/or LM are used by the processing unit for determining the position of the guided vehicle, in particular the position of said closest extremity of the guided vehicle, compared to the beacon center. In particular, the reference marks RM and LM and their relative positions/locations compared to said closest extremity of the guided vehicle 2 are used by the processing unit for determining the balise center when correlating the signals SL and SR.

Finally, figure 6 shows a schematic representation of a cooperation of the system 1 according to the invention with an on-board equipment 6. For this purpose, the system 1 according to the invention may comprise communication means for exchanging data and/or signals with at least one on-board equipment. The system 1 according to the invention is able to communicate with an on-board equipment 6 for exchanging signals or data D. For example, the system 1 may provide the on-board equipment with the location of the reference mark LM and/or RM, i.e. with the data DL and/or DR. In particular, the processing unit 14 of the system 1 according to the invention may provide the on-board equipment 6 with a discrete digital signal SD that indicates the time at which a beacon center has been detected from the measurement of the beacon profile. Advantageously, the on-board equipment 6 may determine the location of the beacon center compared to said closest extremity of the guided vehicle from the knowledge of the guided vehicle speed, the time at which the center of the beacon has been detected, the distance DL. Alternatively, the on-board equipment may provide the processing unit 14 with data dS related to the guided vehicle speed in function of the time, said data dS being in particular used, by the processing unit together with the data DL and geometric characteristics of the beacon like the length of its profile for determining the position of the guided vehicle extremity compared to the beacon center in function of the time. If the system 1 according to the invention also comprises a balise reader 5, then it may provide the on-board equipment 6 with the signal SR, the signal SD, the data DL and DR for further processing.

To summarize, the present invention proposes a simple system and method for detecting directly or indirectly the center of a beacon 4 and by the way the position of a guided vehicle relative to a beacon such an Eurobalise, wherein said position is determined by a system comprising a processing unit 14 and a laser rangefinder 12, wherein the beacon center is determined from beacon profile measurement by means of the laser rangefinder. According to the present invention, the location and detection of the center of a beacon is done from the reading of the profile of said beacon by means of a laser rangefinder. Finally, the skilled man will recognize that while the present invention is related to the detection of the center of a beacon, it refers more specifically to the detection/determination of the center of the transmitting loop of the beacon, and consequently, the present invention also applies to the determination of the center of any loop that works in a similar way to that of the beacon. Consequently, a beacon according to the invention is a device that comprises at least a transmitting loop which center might be determined according to claim 1 and/or claim 10.

## Claims

1. System (1) for detecting the center of a beacon (4) installed at a point along a route followed by a guided vehicle (2), the system (1) being configured for being mounted on-board the guided vehicle (2) and capable of locating the center of the beacon when said guided vehicle passes the beacon, the system (1) comprising:
- a laser rangefinder (12) using a laser beam (121) for measuring a distance to the beacon (4) when the guided vehicle passes the beacon, the laser rangefinder delivering a signal SL that is a measure of the distance to objects that have reflected its laser beam, wherein the laser rangefinder (12) has its laser beam (121) configured for pointing to a direction that points to the beacon (4) when the guided vehicle (22) on-board of which the system according to the invention is installed passes said beacon (4);
- a processing unit (14) configured for identifying a beacon profile in the signal SL and for determining the center of the beacon (4) from the identified beacon profile.

2. System according to claim 1, comprising several laser rangefinders (12), each laser rangefinder (12) providing the processing unit (14) with a signal that is a measure of a distance to objects reflecting the laser beam (121) .

3. System according to one of the claim 1 or 2, configured for cooperating with a beacon reader (5).

4. System according to one of the claims 1-3, wherein the processing unit (14) comprises a database configured for storing beacon profiles.

5. System according to claim 4, wherein each beacon profile stored in the database of the processing unit (14) is **characterized by** a point M2 whose position from the center of the corresponding beacon is stored in the database.

6. System according to one of the claim 3-5, wherein the processing unit (14) is configured for correlating the signal SL with a signal SR of the beacon reader, wherein the signal SR is delivered by a receiver (51) of the beacon reader, the signal SR being a measure of the electromagnetic field emitted by the beacon (4) and detected by the receiver (51).

7. System according to claim 6, wherein the signal SR is used for triggering the signal SL.

8. Further sytem comprising the system according to one of the claims 1-7, further comprising a beacon (4) installed at a point along the route with a lid (41) configured for being fixed to the beacon (4) in order to modify the profile of the beacon (4) scanned by the laser rangefinder (12) according to a special pattern.

9. Guided vehicle (2) comprising the system (1) according to one of the claims 1-7.

10. Method for detecting the center of a beacon (4) installed at a point along a route followed by a guided vehicle (2) on board of which a system (1) for detecting the center of the beacon (4) is installed, said system (1) comprising a laser rangefinder (12) and a processing unit (14), the method comprising the following steps:
- using the laser beam (121) of the laser rangefinder (12) for measuring a distance to the beacon (4), said laser rangefinder (12) delivering a signal SL that is a measure of the distance to objects reflecting said laser beam (121), wherein the laser rangefinder (12) has its laser beam (121) pointing to a direction that points to the beacon (4) when the guided vehicle (22) on-board of which the system according to the invention is installed passes said beacon (4);
- processing the signal SL by means of a processing unit (14), wherein said processing comprising identifying a beacon profile in the signal SL, and determining from said beacon profile the center of the beacon (4).

11. Method according to claim 10, comprising storing beacon profiles in a database of the processing unit (14).

12. Method according to claim 10 or 11, comprising using several laser rangefinders (12) and processing each signal delivered by each laser rangefinder (12) in parallel by means of the processing unit (14).

13. Method according to claim 10 or 11, wherein the system (1) according to the invention cooperates with a beacon reader (5).

## Patentansprüche

1. System (1) zum Erkennen der Mitte einer Bake (4), die an einer Stelle auf einer von einem spurgebundenen Fahrzeug (2) befahrenen Strecke installiert ist, wobei das System (1) für den Einbau an Bord des spurgebundenen Fahrzeugs (2) konfiguriert und in der Lage ist, die Mitte der Bake zu finden, wenn das spurgebundene Fahrzeug über die Bake fährt, wobei das System (1) Folgendes umfasst:
- einen Laser-Entfernungsmesser (12), der mithilfe eines Laserstrahls (121) eine Entfernung zu der Bake (4) misst, wenn das spurgebundene Fahrzeug über die Bake fährt, wobei der Laser-Entfernungsmesser ein Signal SL liefert, bei dem es sich um ein Maß für die Entfernung zu Gegenständen handelt, die seinen Laserstrahl reflektieren, wobei der Laserstrahl (121) des Laser-Entfernungsmessers (12) so konfiguriert ist, dass er in eine Richtung weist, die zu der Bake (4) weist, wenn das spurgebundene Fahrzeug (22), in das das erfindungsgemäße System eingebaut ist, über die Bake (4) fährt,
- eine Verarbeitungseinheit (14), die so konfiguriert ist, dass sie ein Bakenprofil im Signal SL identifiziert und anhand des identifizierten Bakenprofils die Mitte der Bake (4) bestimmt.

2. System nach Anspruch 1, das mehrere Laser-Entfernungsmesser (12) umfasst, wobei jeder Laser-Entfernungsmesser (12) ein Signal an die Verarbeitungseinheit (14) liefert, bei dem es sich um ein Maß für eine Entfernung zu Gegenständen handelt, die den Laserstrahl (121) reflektieren.

3. System nach einem der Ansprüche 1 oder 2, das so konfiguriert ist, dass es mit einem Bakenlesegerät (5) zusammenwirkt.

4. System nach einem der Ansprüche 1 bis 3, wobei die Verarbeitungseinheit (14) eine Datenbank umfasst, die so konfiguriert ist, dass sie Bakenprofile speichert.

5. System nach Anspruch 4, wobei jedes in der Datenbank der Verarbeitungseinheit (14) gespeicherte Bakenprofil durch einen Punkt M2 gekennzeichnet ist, dessen Lage in Bezug zur Mitte der entsprechenden Bake in der Datenbank gespeichert ist.

6. System nach einem der Ansprüche 3 bis 5, wobei die Verarbeitungseinheit (14) so konfiguriert ist, dass sie das Signal SL mit einem Signal SR des Bakenlesegeräts korreliert, wobei das Signal SR von einem Empfänger (51) des Bakenlesegeräts geliefert wird, wobei es sich bei dem Signal SR um ein Maß für das elektromagnetische Feld handelt, das von der Bake (4) emittiert und von dem Empfänger (51) erkannt wird.

7. System nach Anspruch 6, wobei das Signal SR zum Auslösen des Signals SL benutzt wird.

8. Weiteres System mit dem System nach einem der Ansprüche 1 bis 7, das ferner eine an einer Stelle auf der Strecke installierte Bake (4) mit einem Deckel (41) umfasst, der so konfiguriert ist, dass er sich an der Bake (4) befestigen lässt und so das Profil der Bake (4), das von dem Laser-Entfernungsmesser (12) abgetastet wird, einem bestimmten Muster entsprechend ändert.

9. Spurgebundenes Fahrzeug (2) mit dem System (1) nach einem der Ansprüche 1 bis 7.

10. Verfahren zum Erkennen der Mitte einer Bake (4), die an einer Stelle auf einer Strecke installiert ist, die von einem spurgebundenen Fahrzeug (2) befahren wird, in das ein System (1) zum Erkennen der Mitte der Bake (4) eingebaut ist, wobei das System (1) einen Laser-Entfernungsmesser (12) und eine Verarbeitungseinheit (14) umfasst, wobei das Verfahren folgende Schritte umfasst:
- Benutzen des Laserstrahls (121) des Laser-Entfernungsmessers (12) zum Messen einer Entfernung zu der Bake (4), wobei der Laser-Entfernungsmesser (12) ein Signal SL liefert, bei dem es sich um ein Maß für die Entfernung zu Gegenständen handelt, die den Laserstrahl (121) reflektieren, wobei der Laserstrahl (121) des Laser-Entfernungsmessers (12) in eine Richtung weist, die zu der Bake (4) weist, wenn das spurgebundene Fahrzeug (22), in das das erfindungsgemäße System eingebaut ist, über die Bake (4) fährt,
- Verarbeiten des Signals SL mithilfe einer Verarbeitungseinheit (14), wobei das Verarbeiten das Identifizieren eines Bakenprofils in dem Signal SL und das Bestimmen der Mitte der Bake (4) anhand des Bakenprofils umfasst.

11. Verfahren nach Anspruch 10, das das Speichern von Bakenprofilen in einer Datenbank der Verarbeitungseinheit (14) umfasst.

12. Verfahren nach Anspruch 10 oder 11, dass das Benutzen mehrerer Laser-Entfernungsmesser (12) und das gleichzeitige Verarbeiten jedes von jedem Laser-Entfernungsmesser (12) gelieferten Signals mithilfe der Verarbeitungseinheit (14) umfasst.

13. Verfahren nach Anspruch 10 oder 11, wobei das erfindungsgemäße System (1) mit einem Bakenlesegerät (5) zusammenwirkt.

## Revendications

1. Système (1) pour détecter le centre d'une balise (4) installée à un point le long d'un itinéraire suivi par un véhicule guidé (2), le système (1) étant configuré pour être monté à bord du véhicule guidé (2) et permettant de localiser le centre de la balise lorsque ledit véhicule guidé passe la balise, le système (1) comprenant :
- un télémètre à laser (12) utilisant un faisceau laser (121) pour mesurer une distance à la balise (4) lorsque le véhicule guidé passe la balise, le télémètre à laser délivrant un signal SL qui est une mesure de la distance aux objets qui ont réfléchi son faisceau laser, dans lequel le télémètre à laser (12) a son faisceau laser (121) configuré pour être dirigé dans un sens qui indique à la balise (4) quand le véhicule guidé (22), à bord duquel est installé le système selon l'invention, passe ladite balise (4) ;
- une unité de traitement (14) configurée pour identifier un profil de balise dans le signal SL et pour déterminer le centre de la balise (4) à partir du profil de balise identifié.

2. Système selon la revendication 1, comprenant plusieurs télémètres à laser (12), chaque télémètre à laser (12) fournissant un signal à l'unité de traitement (14) qui est une mesure d'une distance aux objets réfléchissant le faisceau laser (121) .

3. Système selon l'une quelconque des revendications 1 ou 2, configuré pour coopérer avec un lecteur de balises (5).

4. Système selon l'une quelconque des revendications 1 à 3, dans lequel l'unité de traitement (14) comprend une base de données configurée pour enregistrer des profils de balises.

5. Système selon la revendication 4, dans lequel chaque profil de balise enregistré dans la base de données de l'unité de traitement (14) est **caractérisé par** un point M2 dont la position à partir du centre de la balise correspondante est enregistrée dans la base de données.

6. Système selon l'une quelconque des revendications 3 à 5, dans lequel l'unité de traitement (14) est configurée pour établir une corrélation entre le signal SL et un signal SR du lecteur de balises, dans lequel le signal SR est délivré par un récepteur (51) du lecteur de balises, le signal SR étant une mesure du champ électromagnétique émis par la balise (4) et détecté par le récepteur (51).

7. Système selon la revendication 6, dans lequel le signal SR est utilisé pour déclencher le signal SL.

8. Système supplémentaire comprenant le système selon l'une quelconque des revendications 1 à 7, comprenant, en outre, une balise (4), installée à un point le long de l'itinéraire, avec un couvercle (41) configuré pour être fixé à la balise (4) afin de modifier le profil de la balise (4) scanné par le télémètre à laser (12) selon un modèle spécial.

9. Véhicule guidé (2) comprenant le système (1) selon l'une quelconque des revendications 1 à 7.

10. Procédé pour détecter le centre d'une balise (4) installée à un point le long d'un itinéraire suivi par un véhicule guidé (2) à bord duquel est installé un système (1) pour détecter le centre de la balise (4), ledit système (1) comprenant un télémètre à laser (12) et une unité de traitement (14), le procédé comprenant les étapes suivantes :
- utilisation du faisceau laser (121) du télémètre à laser (12) pour mesurer une distance à la balise (4), ledit télémètre à laser (12) délivrant un signal SL qui est une mesure de la distance aux objets réfléchissant ledit laser (121), dans lequel le télémètre à laser (12) a son faisceau laser (121) dirigé dans un sens qui indique à la balise (4) quand le véhicule guidé (22), à bord duquel est installé le système selon l'invention, passe ladite balise (4) ;
- traitement du signal SL au moyen d'une unité de traitement (14), ledit traitement comprenant l'identification d'un profil de balise dans le signal SL, et détermination à partir dudit profil de balise du centre de la balise (4).

11. Procédé selon la revendication 10, comprenant l'enregistrement des profils de balises dans une base de données de l'unité de traitement (14).

12. Procédé selon la revendication 10 ou 11, comprenant l'utilisation de plusieurs télémètres à laser (12) et le traitement en parallèle de chaque signal délivré par chaque télémètre à laser (12) au moyen de l'unité de traitement (14).

13. Procédé selon la revendication 10 ou 11, dans lequel le système (1) selon l'invention coopère avec un lecteur de balises (5) .
